# EUROPÄISCHE PATENTSCHRIFT

(11) **EP 2 180 348 B1**
(45) Veröffentlichungstag und Bekanntmachung des Hinweises auf die Patenterteilung: **16.02.2011**
(21) Anmeldenummer: 08105628.5
(22) Anmeldetag: 22.10.2008
(51) Int. Cl.: G01V 8/20

(54) **Sicherheitslichtgitter und entsprechendes Verfahren zur Überwachung eines Schutzbereichs**
Safety light curtain and corresponding method for monitoring a protection area
Barrière lumineuse de sécurité et procédé correspondant de surveillance d'une zone de protection

(43) Veröffentlichungstag der Anmeldung: 28.04.2010
(73) Patentinhaber: SICK AG, 79183 Waldkirch (DE)
(72) Erfinder: Bukowski, Jürgen, 79261 Gutach (DE); Zettl, Heinrich, 35792 Löhnberg (DE)
(74) Vertreter: Ludewigt, Christoph

(56) Entgegenhaltungen:
- EP-A- 1 870 734
- DE-A1- 19 707 417
- DE-A1- 19 946 476

## Beschreibung

Die Erfindung betrifft eine Vorrichtung nach dem Oberbegriff des Anspruchs 1.

Sicherheitsgerichtete optoelektronische Sensoren unterliegen hohen Anforderungen bezüglich einer geforderten Zuverlässigkeit gemäß verschiedener Normen, wie beispielsweise der Norm "Sicherheit von Maschinen - Berührungslose Schutzeinrichtungen (BWS)", EN/IEC 61496 oder der europäischen Norm "Funktionale Sicherheit sicherheitsbezogener elektrischer, elektronischer, programmierbarer elektronischer Systeme", EN 61508. Die optoelektronischen Sensoren werden in Sicherheitskategorien unterteilt, die in der Norm "Sicherheitsbezogene Teile von Steuerungen"
EN 954 oder deren Nachfolgenorm EN 13849 festgelegt sind.

Genormte Sicherheitslevel sind notwendig, da derartige Sensoren als Schutzmaßnahmen an Gefahr bringenden Maschinen, wie Pressen, Stanzwerkzeugen, Robotern u.ä. eingesetzt werden und somit Leben und Gesundheit von Bedienungspersonal von der Funktionstüchtigkeit der Sensoren abhängt, damit die Sensoren im Gefahrenfall ein sicherheitsgerichtetes Schaltsignal abgeben können.

Derartige optoelektronische Sensoren werden beispielsweise am Rand eines Gefahrenbereiches einer Werkzeugmaschine eingesetzt, um gegebenenfalls das Betreten dieses Gefahrenbereiches zu detektieren und ein optisches oder akustisches Warnsignal bzw. ein Abschaltsignal für die Werkzeugmaschine auszulösen.

Bisherige Lichtgitter haben in einer Sendeeinheit, welche am Rand des Überwachungsbereiches angeordnet sind, in einer Reihe eine Vielzahl von Lichtsendern. Auf dem der Sendeeinheit gegenüberliegenden Rand des Überwachungsbereiches befindet sich eine Lichtempfangseinheit, in der ebenfalls in einer Reihe eine Vielzahl von Lichtempfängern angeordnet sind. Dabei ist jeweils der erste Lichtsender auf den ersten Lichtempfänger, der zweite Lichtsender auf den zweiten Lichtempfänger und so weiter zueinander ausgerichtet. Eine Ansteuer- und Auswerteeinheit aktiviert nach einem vorgegebenen Zeitplan nacheinander alle aufeinander ausgerichteten Lichtsender und Lichtempfänger. Auf diese Weise wird der Überwachungsbereich mit einer Vielzahl von Lichtstrahlen, vergleichbar mit parallel zueinander verlaufenden Gitterstäben, durchleuchtet. Sobald ein Objekt in den Überwachungsbereich eindringt, werden, abhängig von der Größe des Objektes, eine Anzahl der Lichtstrahlen im Überwachungsbereich von dem Objekt unterbrochen. In der Auswerteeinheit wird dieser Zustand erfasst und zur Einleitung entsprechender Maßnahmen an z. B. die Steuerung der Produktionsanlage weitergeleitet.

Aus der EP 1 870 734 A1 ist ein Sicherheitslichtgitter bekannt, bestehend aus wenigstens zwei Sende-/Empfangsleisten, in welchen jeweils Sende- und Empfangselemente angeordnet sind. Die Sende-/Empfangsleisten sind einander gegenüberliegend angeordnet, wobei zwischen diesen Sende-/Empfangsleisten ein Schutzfeld gebildet ist. Weiter sind Mittel zur Synchronisation und eine Steuer- und Auswerteeinheit vorgesehen. Die Sende-/Empfangsleisten sind identisch aufgebaut und in jeder Sende-/Empfangsleiste ist eine Steuer- und Empfangseinheit integriert. Die Steuer- und Auswerteeinheiten sind einkanalig ausgebildet und weisen jeweils wenigstens einen sicherheitsgerichteten Ausgang auf, die beide zusammen einen für die Sicherheit erforderlichen redundanten Schaltkanal bilden.

Abhängig von einer Applikation ist es ggf. notwendig, dass bestimmte Objekte, z. B. Verarbeitungsmaterial, durch den Überwachungsbereich hindurch bewegt werden müssen, ohne dass dabei die Produktionsanlage beeinflusst werden soll, während jedoch beim Eintritt einer Person die Produktionsanlage in einen sicheren Zustand gebracht werden muss. Dazu ist es nach dem Stand der Technik bekannt, in die Kontrollvorrichtung mehrere zusätzliche Mutingsensoren (Lichtschranken oder Lichttaster) zu integrieren, um damit die äußeren Abmessungen der Objekte, die sich durch den Überwachungsbereich hindurch bewegen, erfassen zu können. Diese Mutingsensoren können dabei in unmittelbarer Nähe des Überwachungsbereiches angeordnet, als auch räumlich dem Überwachungsbereich in Transportrichtung des Verarbeitungsmaterials bzw. in der Bewegungsrichtung der Person vorgelagert sein. Ebenfalls ist es bekannt, auch eine zeitliche Reihenfolge, in der die einzelnen Mutingsensoren vom bewegten Objekt beeinflusst werden, zur Erfassung der äußeren Abmessungen der Objekte mit einzubeziehen.

In der Auswerteeinheit werden die Informationen von den Mutingsensoren mit zuvor festgelegten Vorgaben verglichen und damit ein Entscheidungskriterium gewonnen. Wird das Objekt einem "zulässigen" Objekt (z. B. Verarbeitungsmaterial) zugeordnet, so wird das Lichtgitter für dieses Objekt überbrückt. Wird das Objekt jedoch einem "unzulässigen" Objekt (z. B. Personen) zugeordnet, so wird die Produktionsanlage in einen sicheren Zustand gebracht.

Nachteilig an den bekannten Kontrollvorrichtungen ist, dass diese Mutingsensoren im Einsatzfall oft eine geringe Verfügbarkeit bieten. Die Störanfälligkeit wird insbesondere durch eine Dejustage oder Verschmutzung verursacht. Zusätzlich erfordern die Mutingsensoren einen erhöhten Installationsaufwand sowohl bei der mechanischen Montage als auch bei der elektrischen Verkabelung. Sofern die Mutingsensoren räumlich dem Überwachungsbereich in Transportrichtung vorgelagert sind, wird dafür zusätzlicher Platz notwendig, der bei den kompakten Produktionsanlagen oft nicht zur Verfügung steht.

Aus der DE 197 07 417 A1 ist ein optoelektronischer Sensor bekannt, der nach dem Triangulationsprinzip arbeitet.

Die DE 199 46 476 A1 offenbart einen optoelektronischen Sensor mit einer Sende- und einer Empfangseinheit, wobei eine Lichtlaufzeit vom Aussenden bis zum Empfangen des Lichtsignals ermittelt wird und ein Unterbrechungssignal erzeugt wird, wenn die ermittelte Lichtlaufzeit von einer vorbestimmten Maximal-Lichtlaufzeit abweicht.

Davon ausgehend besteht die Aufgabe darin, ein Lichtgitter und ein Verfahren bereitzustellen, das zum einen eine einfache Schutzbereichsüberwachung erlaubt und zum anderen eine geometrische Erkennung der eindringenden Objekte ermöglicht.

Die Aufgabe wird gelöst mit einem Sicherheitslichtgitter zur Überwachung eines Schutzbereiches mit wenigstens zwei Sende-/Empfangsleisten mit wenigstens einem Lichtsender und mit wenigstens einem Lichtempfänger. Die Sende-/Empfangsleisten sind einander gegenüberliegend angeordnet und zwischen diesen ist durch die Lichtstrahlen der Lichtsender ein Schutzfeld gebildet, wobei jeweils wenigstens ein Lichtsender der einen Sende-/Empfangsleiste und wenigstens ein Lichtempfänger der anderen Sende-/Empfangsleiste ein Sende-/Empfangspaar bilden. Weiter sind Mittel zur Synchronisation der Sende-/Empfangsleisten und eine Steuer- und Auswerteeinheit vorhanden. Erfindungsgemäß bilden zusätzlich einer der Lichtsender einer der Sende-/Empfangsleisten mit wenigstens einem der Lichtempfänger derselben Sende-/Empfangsleiste einen Lichttaster.

Alternativ wird die Aufgabe mit einem Verfahren gelöst zur Überwachung eines Schutzbereiches mit wenigstens zwei, einander gegenüberliegend angeordneten Sende-/Empfangsleisten mit Lichtsendern und Lichtempfängern zur Bildung eines durch die Lichtstrahlen der Lichtsender erzeugten Schutzfeldes zwischen den Sende-/Empfangsleisten. Jeweils wenigstens ein Lichtsender und wenigstens ein Lichtempfänger wirken als Sende-/Empfangspaar zusammen und bei Unterbrechung wenigstens einer der Lichtstrahlen kann ein Sicherheitsschaltsignal ausgegeben werden. Zusätzlich zur Lichtstrahlunterbrechung wird eine Entfernung zwischen dem die Lichtstrahlunterbrechung verursachenden Objekt und wenigstens einer der Sende-/Empfangsleisten bestimmt.

Durch das erfindungsgemäße Lichtgitter lassen sich zunächst einfach und über große Reichweiten Objekteingriffe erkennen. Tritt ein Objekt in das Schutzfeld zwischen die Sende-/Empfangsleisten ein, so detektiert wenigstens ein Sende-/Empfangspaar eine Lichtstrahlunterbrechung, wodurch ein Objektfeststellungssignal generiert wird und infolgedessen gegebenenfalls ein Sicherheitsschaltsignal. Eine solche Lichtstrahlunterbrechung kann einfach ausgewertet und detektiert werden. Dadurch ist eine kurze Ansprechzeit des Lichtgitters gewährleistet. Auch für große Reichweiten, beispielsweise bis zu 100 m ist eine Lichtstrahlunterbrechung einfach zu detektieren.

Zur Erkennung von Objekten verschiedener Größen werden die Sende-/Empfangspaare in unterschiedlichen Abständen zueinander angeordnet. Mittels der Anzahl unterbrochener, benachbarter Lichtstrahlen und des Abstandes der Lichtstrahlen zueinander kann eine Objekthöhe bestimmt werden.

Zusätzlich ist es durch die erfindungsgemäß gebildeten Lichttaster mit dem Lichtgitter auch möglich genaue Angaben zu einer Objektkontur zu erhalten, die durch eine einfache Strahlunterbrechung nicht erfasst werden könnte. Durch die Lichttaster kann ein Objekt jetzt aber vermessen werden oder aufgrund der erfassten Objektkontur das Objekt als zulässiges oder unzulässiges Objekt eingestuft werden und abhängig von diesem Ergebnis ein Objektfeststellungssignal bzw. Sicherheitsschaltsignal generiert werden. Mit dem erfindungsgemäßen Lichtgitter ist es somit möglich, nicht nur die Objekthöhe sondern auch die seitliche Kontur des Objektes zu bestimmen, während das Objekt das Schutzfeld passiert.

Wird ein Objekt beispielsweise auf einem Förderband durch das Lichtgitter transportiert, so kann zum einen durch das Unterbrechen der einzelnen Sende-/Empfangspaare ein Höhenprofil des Objektes ermittelt und abgespeichert werden und zum anderen durch die gebildeten Lichttaster gleichzeitig auch die Abstandskonturdaten einer der jeweiligen Sende-/Empfangsleiste zugewandten Seite des Objektes erfasst und abgespeichert werden. Durch das erfindungsgemäße Sicherheitslichtgitter kann somit gleichzeitig ein Höhenprofil und eine seitliche Abstandskontur erfasst werden und zur Beurteilung des Objektes verwendet werden.

Bei bestimmten Anwendungen ist es vorgesehen, dass vordefinierte, zulässige Objekte den Schutzbereich passieren können, ohne dass ein Sicherheitsschaltsignal erzeugt wird. So wird beispielsweise bei einem Durchqueren des Schutzbereichs von zulässigen Objekten, beispielsweise mittels eines Förderbandes, kein Sicherheitsschaltsignal ausgelöst, während beim Fördern eines unzulässigen Objektes, beispielsweise einer Person, durch den Schutzbereich - auch wenn die Person sich seitlich des zulässigen Objekts befindet und dieses nicht überragt - ein entsprechendes Sicherheitsschaltsignal ausgelöst wird.

In einer bevorzugten Ausführungsform ist der Lichttaster als Triangulationslichttaster ausgebildet. Der Lichtempfänger weist dann ein ortsauflösendes Empfangselement auf. Bei der Triangulationsmessung ist der Ort eines abgebildeten Lichtflecks auf dem ortsauflösenden Empfänger abhängig von der Entfernung des erfassten Objektes. Dabei dient der Ort des Remissionseinfalls auf den Empfänger als Maß für die Objektentfernung. Dabei ist der Lichtsender ausgebildet einen Sendelichtkegel und/oder einen kollimierten Lichtstrahl auszusenden, und der Sendelichtkegel ist in einem Nahbereich so klein, dass ein Lichtfleck, der auf ein Objekt auftrifft, auf den ortsauflösenden Empfänger derart abgebildet wird, dass der Abstand des Objektes zu dem Triangulationstaster über den Ort das Lichtflecks auf dem Empfänger bestimmt werden kann. Hat der Sendelichtkegel beispielsweise einen Abstrahlwinkel von +/- 2,5°, so hat ein entsprechender Lichtfleck in einem Abstand von 0,5 m einen Durchmesser von 43 mm. Beträgt der Abstrahlwinkel des Sendelichtkegels +/-1,5°, so beträgt der Durchmesser des Lichtflecks nur noch lediglich ca. 26 mm in einem Abstand von 0,5 m der Sende-/Empfangsleiste. Je nach dem Auftreffort des Lichtflecks auf dem ortsauflösenden Empfangselement kann dann eine Entfernung des Objektes bestimmt werden.

Das ortsauflösende Empfangselement kann dabei als ortsauflösende Zeile oder Matrix ausgebildet sein. Die ortsauflösende Zeile ist kostengünstig und ein detektierter Abstand lässt sich einem kleinen Detektionsbereich zuordnen. Die ortsauflösende Matrix ermöglicht einen größeren Detektionsbereich. Die Größe der Empfangselemente der Zeile bzw. der Matrix können unterschiedlich sein. Die Empfangselemente sind für einen Nahbereich am größten, da eine Veränderung des Lichtflecks auf dem Empfangselement bei einer Abstandsänderung groß ist im Vergleich zu einer Abstandsänderung im Fernbereich. Im Fernbereich sind die Empfangselemente kleiner ausgebildet, um eine feinere Auflösung der Abstandserkennung zu ermöglichen.

Für größere Entfernungen des Objektes von der Sende-/Empfangsleiste ist es auch möglich die Objektentfernung energetisch zu ermitteln. Hierbei wird die reflektierte Lichtmenge ausgewertet und beurteilt, ob ein Objekt in einem bestimmten Abstand vorhanden ist oder nicht.

Weiter ist es vorgesehen, dass parallel zueinander ausgerichtete, kollimierte Abtaststrahlen in den Detektionsbereich von den Lichtsendern ausgesandt werden und das an dem zu detektierenden Objekt im Detektionsbereich reflektierte und/oder remittierte Licht mit Lichtempfangseinheiten über ein Empfangsobjektiv ortsaufgelöst vom Lichtempfänger empfangen wird. Der Lichtsender kann auch derart ausgebildet sein, dass dieser einen Sendelichtkegel mit einem Abstrahlwinkel aussendet und zusätzlich einen kollimierten Abtaststrahl aussendet. In einer besonderen Ausführungsform weist der Sendelichtkegel einen konzentrierten kollimierten Lichtschwerpunkt zentral in dem Sendelichtkegel auf.

In einer weiteren Ausführungsform ist der Lichttaster als Lichtlaufzeittaster ausgebildet, wobei die Steuer- und Auswerteeinheit ausgebildet ist, die Lichtlaufzeit empfangener Lichtsignale oder Lichtimpulse des Lichtempfängers auszuwerten.

Durch die Verwendung von pulsförmigen Lichtsignalen kann die vom Aussenden der Lichtsignale bis zum Empfangen der Lichtsignale verstrichene Lichtlaufzeit ermittelt werden, die repräsentativ für den Abstand zu dem Objekt ist.

Dringt ein Objekt in den Schutzbereich ein, so dass zumindest einer der ausgesendeten Lichtstrahlen unterbrochen und reflektiert bzw. remittiert wird, wird die Lichtlaufzeit des entsprechenden Lichtsignals ermittelt, so dass eine Objektkontur erfasst wird, die je nach Anwendung zu einer gewünschten Folgeaktion führt. Dies kann beispielsweise die Ausgabe eines Sicherheitsschaltsignals zum Stillsetzen einer zu überwachenden Maschine, zum Abgeben eines Alarmsignals, eine Messwertausgabe oder auch eine Messwertspeicherung sein.

Gemäß einer weiteren Ausführungsform werden charakteristische Konturen der zulässigen Objekte eingelernt, indem die Entfernungswerte, die sich beim Reflektieren der ausgesandten Lichtsignale an dem jeweiligen Objekt ergeben, eingelernt und in einem Speicher abgespeichert werden. Tritt ein Objekt in den Schutzbereich ein, so werden vor Erzeugen des Sicherheitsschaltsignals die gemessenen Entfernungswerte mit den abgespeicherten Entfernungswerten verglichen und es wird kein Sicherheitsschaltsignal erzeugt, falls die gemessenen Entfernungswerte mit den Entfernungswerten zulässiger Objekte innerhalb eines vorgegebenen Toleranzbereichs übereinstimmen.

Je nach Form der zulässigen Objekte können dabei mehrere zulässige Entfernungswerte abgespeichert sein, die insbesondere bei der Verwendung von mehreren Lichttastern abhängig vom Auftreffort der Lichtstrahlen unterschiedlich sein können. Tritt ein unzulässiges Objekt in den Schutzbereich ein oder ist ein zulässiges Objekt nicht korrekt positioniert, so stimmt die ermittelte Entfernung mit der zulässigen Entfernung nicht überein, so dass in diesem Fall ein Sicherheitsschaltsignal erzeugt wird.

Vorzugsweise ist der Lichtsender und/oder Lichtempfänger sowohl Teil des Sende-/Empfangspaares als auch Teil des Lichttasters. Somit ist ein und derselbe Lichtsender bzw. Lichtempfänger notwendig, um sowohl ein Sende-/Empfangspaar als auch einen Lichttaster zu bilden. Nach Unterbrechung des Lichtstrahles durch ein Objekt wird der durch das Objekt remittierte Lichtstrahl auf ein zugehöriges Empfangselement der gleichen Sende-/Empfangsleiste wie des Lichtsenders gelenkt und ein Abstandssignal ermittelt.

In Weiterbildung der Erfindung sind die Lichtsender und Lichtempfänger einzeln abwechselnd nacheinander in den Sende-/Empfangsleisten angeordnet. Vorzugsweise ist dabei eine Vielzahl von Lichtsendern und Lichtempfängern angeordnet. Dadurch ist eine gleichmäßige Auflösung des Lichtgitters über die gesamte Schutzfeldlänge gewährleistet. Vorteilhaft liegen auch die Lichttaster dabei direkt benachbart nebeneinander gleichverteilt über die gesamte Schutzfeldlänge.

Wird eine Leiste längs um 180° gedreht gegenüber der gegenüberliegenden Leiste montiert, so liegen sich die Lichtsender und Lichtempfänger zur Bildung der Sende-/Empfangspaare direkt gegenüber, wodurch ein homogenes Schutzfeld mit parallelen Lichtstrahlen entsteht. Die Sender und Empfänger zur Bildung des Lichttasters liegen auch hier direkt nebeneinander.

In Weiterbildung der Erfindung bilden jeweils benachbarte Lichtsender und Lichtempfänger einen Lichttaster. Dadurch ist ein besonders einfacher Aufbau des Sicherheitslichtgitters gewährleistet und die gebildeten Lichttaster sind als eine Einheit mit gleichmäßigen Abständen zueinander entlang einer Sende-/Empfangsleiste angeordnet. Durch diese Anordnung kann das Sicherheitslichtgitter modular für verschiedene Schutzfeldhöhen aufgebaut werden. Je nach Schutzfeldhöhe wird eine bestimmte Anzahl von jeweils benachbarten Lichtsendern und Lichtempfängern zur Bildung von Lichttastern angeordnet. Durch die benachbarte Anordnung der Lichttaster sind die gemessenen Abstandswerte auch unmittelbar einem jeweiligen Sende-/Empfangspaar zuordenbar, so dass bei einer Unterbrechung eines Lichtstrahls auch direkt ein zugehöriger Abstand des den Lichtstrahl unterbrechenden Objektes ermittelt wird.

In einer bevorzugten Ausführungsform sind allen Lichtsendern einer Sende-/Empfangsleisten die gesamten Lichtempfänger derselben Sende-/Empfangsleiste zur Bildung der Lichttaster zugeordnet. Hierdurch ist es vorteilhaft möglich, dass eine Entfernungsbestimmung über die gesamte Länge der Leiste erfolgt. Dadurch ist über das gesamte Schutzfeld sowohl eine Unterbrechung der Lichtstrahlen erkennbar als auch ein Abstand detektierbar.

In einer weiteren Ausführungsform der Erfindung ist die Steuer- und Auswerteeinheit derart ausgebildet, dass erst nach einer Lichtstrahlunterbrechung eines Sende-/Empfangspaares der Lichttaster aktiv ist. Dadurch ist zunächst eine schnelle und einfache Auswertung der Sende-/Empfangspaare möglich, wodurch eine kurze Ansprechzeit bei einer Lichtstrahlunterbrechung gewährleistet wird. Erst wenn eine solche Unterbrechung durch ein Objekt stattgefunden hat, wird die Auswertung über die Lichttaster durchgeführt, um die Abstände des Objektes zu den Sende-/Empfangsleisten festzustellen und das Objekt zu vermessen.

Vorzugsweise werden die Lichtsender und die Lichtempfänger in einer festen Reihenfolge nacheinander angesteuert und ausgewertet. Dadurch ist gewährleistet, dass sich die Lichtstrahlen der Sende-/Empfangspaare nicht gegenseitig beeinflussen. Die Lichtsender und Lichtempfänger einer Sende-/Empfangsleiste werden in einem Zyklus jeweils einmal nacheinander aktiviert, danach wird ein neuer Zyklus gestartet. Die gegenüberliegende Sende-/Empfangsleiste wird zu diesem Zyklus synchronisiert. Eine solche Synchronisierung kann optisch über die Sende-/Empfangspaare erfolgen oder auch elektronisch über eine Verbindungsleitung zwischen den Sende-/Empfangsleisten erfolgen. Eine solche Synchronisation kann aber auch über eine Funkverbindung zwischen den Leisten abgestimmt und durchgeführt werden.

In Weiterbildung der Erfindung sind die Sende-/Empfangsleisten identisch aufgebaut. Damit muss nur eine einzige Baugruppe, nämlich die Sende-/Empfangsleiste hergestellt werden, um ein Lichtgitter, bestehend aus zwei solchen gegenüberliegenden Sende-/Empfangsteisten bereitzustellen. Zur Wartung des Lichtgitters braucht auch nur eine einzige Sende-/Empfangsleiste bevorratet zu werden, um bei Ausfall oder Fehlfunktion einer Leiste eine funktionsfähige Ersatzleiste zur Hand zu haben.

Auch elektrische Anschlüsse für beide Sende-/Empfangsleisten sind identisch ausgebildet. Hiermit vereinfacht sich eine Verbindungstechnik, da nur ein Typ von Steckverbindern vorgesehen werden muss. Die Sende-/Empfangsleisten können dadurch auch einfach angeschlossen werden, da nicht wie bei bisherigen Lichtgittem, bestehend aus Sendeleiste und getrennter Empfangsleiste, unterschiedliche Anschlüsse für Sendeleiste und Empfangsleiste vorgesehen werden müssen.

In Weiterbildung der Erfindung werden die Entfernungssignale mit wenigstens einem Referenzabstand verglichen und abhängig davon das Objekt als zulässig oder unzulässig klassifiziert. Hierdurch ist es einfach möglich, zulässige Objekte aufgrund einzelner markanter Abstände zu klassifizieren und abhängig davon eine Aktion durchzuführen. So ist es vorgesehen, aufgrund der Informationen der unterschiedlich klassifizierten Objekte Ausgänge zu betätigen, um verschiedene Stellglieder anzusteuern, beispielsweise um eine Sortiervorrichtung anzusteuern, oder die Informationen auch einer übergeordneten Steuerung zuzuführen um die Information weiterzuverarbeiten und zu verwerten.

In einer besonderen Ausführungsform definieren mehrere Referenzabstände zusammen eine geometrische Funktion, wodurch eine Kontur eines Objektes bestimmt werden kann. Die geometrische Funktion kann beispielsweise eine Gerade unter verschiedenen Winkeln, einen Kreisbogen oder andere einfache geometrische Formen darstellen. Dadurch ist es einfach möglich, eine Formerkennung von Objekten durchzuführen, ohne dass die Objekte eine bestimmte Größe aufweisen müssen. Wird ein Kreisbogen als geometrische Form der Referenzabstände gewählt, so ist es beispielsweise möglich, runde Papierrollen mit unterschiedlichen Durchmessern jeweils als zulässige Objekte zuzulassen, jedoch anderen Objekte, wie beispielsweise quaderförmige Pakete, als unzulässige Objekte zu erkennen. Dadurch, dass die Referenzabstände eine einfache geometrische Funktion darstellen ist auch eine einfache Erkennung von Personen möglich. Eine in das Schutzfeld eintretende Person unterscheidet sich ausreichend von der geometrischen Funktion und wird dadurch sicher als unzulässig erkannt, wodurch eine gefahrbringende Bewegung einer Maschine über Stellglieder abgeschaltet werden kann.

Im Folgenden wird die Erfindung an Hand von Ausführungsbeispielen unter Bezugnahme auf die Zeichnung im Einzelnen erläutert.

In der Zeichnung zeigt:
Figur 1;
   eine schematische Darstellung eines erfindungsgemäßen Sicherheitslichtgitters;
Figur 2 bis 5
   jeweils eine vereinfachte schematische Darstellung weiterer Ausführungsbeispiele mit dem Sicherheitslichtgitter;
Figur 6
   ein erfindungsgemäßes Sicherheitslichtgitter zur Absicherung eines Gefahrenbereichs.

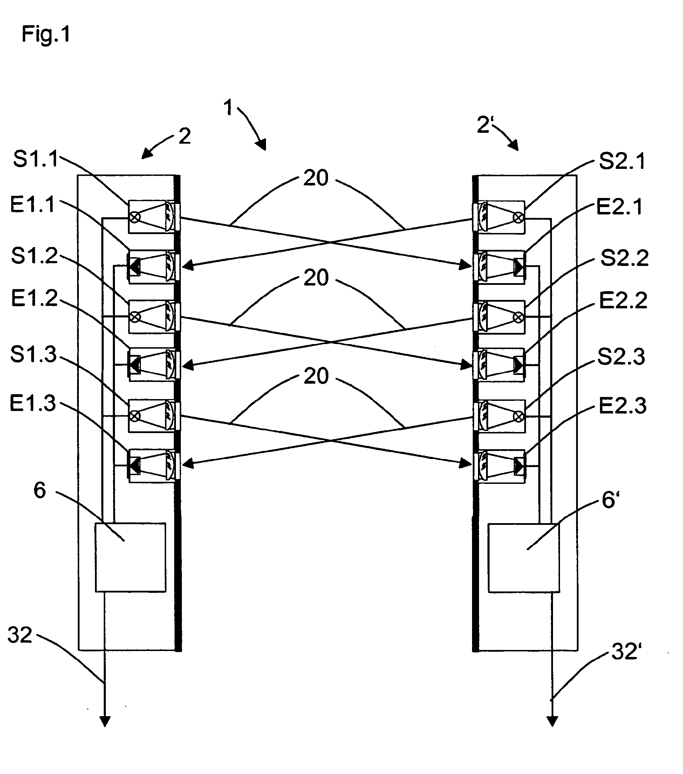

Figur 1 zeigt ein Sicherheitslichtgitter bestehend aus zwei Sende-/Empfangsleisten 2 und 2'. Die Sende-/Empfangsleisten 2 und 2' sind identisch ausgebildet und zueinander gegenüberliegend angeordnet. Die Sende-/Empfangsleisten 2 bzw. 2' bestehen aus den Lichtsendern S1.1, S1.2 und S1.3 bzw. S2.1, S2.2 und S2.3. Abwechselnd hierzu sind die Lichtempfänger E1.1, E1.2 und E1.3 bzw. E2.1, E2.2 und E2.3 angeordnet. Die Lichtsender S1.1 bis S1.3 der ersten Sende-/Empfangsleiste 2 senden dabei Licht aus, welches von den Lichtempfängern E2.1 bis E2.3 der zweiten Sende-/Empfangsleiste 4 empfangen wird, dargestellt durch Lichtstrahlen 20. Umgekehrt wird ausgehendes Licht von den Lichtsendern S2.1 bis S2.3 der zweiten Sende-/Empfangsleiste 2' durch Lichtempfänger E1.1 bis E1.3 der ersten Sende-/Empfangsleiste 2 empfangen. Dadurch wird zwischen den Sende-/Empfangsleisten 2 und 2' ein Schutzfeld 1 gebildet. Ein solches Sicherheitslichtgitter findet beispielsweise Anwendung an Maschinen zur Absicherung von für Personen gefahrbringenden Bewegungen. Greift eine Person unerlaubt in das Schutzfeld 1 ein, wird wenigstens ein Lichtstrahl 20 unterbrochen. Das führt über einen sicheren Ausgang 32 und/oder 32' zur Ausgabe eines Sicherheitsschaltsignals an eine Maschinensteuerung, um die gefahrbringende Bewegung zum Schutz der Person zu stoppen.

Die Lichtsender S1.1 bis S2.3 bestehen dabei aus einem Sendebauteil oder Sendeelement, beispielsweise einer LED und einer Sendeoptik, bestehend aus einer oder mehrerer Linsen. Die Empfangselemente E1.1 bis E2.3 sind analog dazu aus einem photoempfindlichen Bauteil und einer Optik aufgebaut.

Zur Ansteuerung und Auswertung sind die Lichtsender S1.1 bis S2.3 und die Lichtempfänger E1.1 bis E2.3 mit einer Steuer- und Auswerteeinheit 6 bzw. 6' verbunden. Die Lichtsender S1.1 bis S1.3 werden durch die Steuer- und Auswerteeinheit 6 nacheinander angesteuert, wobei diese gepulst angesteuert werden können zur Unterdrückung von Fremdlichtsignalen. Die Lichtempfänger E2.1 bis E2.3 werden nacheinander ausgewertet zum Empfang der Lichtpulse von den gegenüberliegenden Lichtsendern S1.1 bis S1.3. Damit die beiden Sende-/Empfangsleisten 2 und 2' zusammenarbeiten können, um das Schutzfeld 1 aufzuspannen, sind Paare von Lichtsendern S1.1 bis S2.3 und Lichtempfängern E1.1 bis E2.3 zur Bildung der Lichtwege aufeinander abzustimmen, so dass beispielsweise der Lichtempfänger E2.1 nur das Licht von dem Lichtsender S1.1 empfängt. Dazu weist die Steuer- und Auswerteeinheit 6 bzw. 6' Mittel zur zeitlichen Synchronisation auf. Die Steuer- und Auswerteeinheit 6 bzw. 6' kann damit die Auswertung der Lichtempfänger E1.1 bis E2.3 auf die Sendepulse der gegenüberliegenden Lichtsender S1.1 bis S2.3 synchronisieren, wodurch die Lichtwege definiert sind. Nach der Ausführungsform der Fig. 1 überkreuzen sich die Lichtwege.

Zur Erkennung von Objekten verschiedener Größe werden die Sende-/Empfangspaare in unterschiedlichen Ausführungsformen des Lichtgitters in bestimmten Abständen angeordnet. Beispielsweise werden die Sende-/Empfangspaare in Abständen von ca. 7 mm, 10 mm, 15 mm oder 20 mm angeordnet, so dass mindestens zwei Sende-/Empfangspaare abgedeckt werden, um die Auflösungen von 14 mm, 20 mm, 30 mm oder 40 mm in einem Lichtgitter zu erreichen. Die verschiedenen Auflösungen sind vorgeschrieben, um in den verschiedenen Applikationen die Extremitäten von Personen sicher zu detektieren. So ist zur Erkennung von Fingern ein Lichtgitter mit einer Auflösung von 14 mm, zur Erkennung einer Hand eine Auflösung von 20 mm, für eine Armerkennung eine Auflösung von 30 mm und für die Erkennung eines Beines ein Lichtgitter mit einer Auflösung von 40 mm vorgeschrieben. Um Körper von Personen zu detektieren sind weitere größere Auflösungen in den entsprechenden Normen definiert. Aufgrund der unterbrochenen Lichtstrahlen und deren Anzahl und Abstand zueinander kann eine Objekthöhe bestimmt werden.

Wird mindestens ein Lichtweg zwischen einem Lichtsender S1.1 bis S2.3 und einem zugehörigen Lichtempfänger E1.1 bis E2.3 unterbrochen, so wird über die Steuer- und Auswerteeinheit 6 bzw. 6' ein Schaltsignal an den sicheren Ausgang 32 bzw. 32' ausgegeben. Der sichere Ausgang ist dazu mit einer Maschinensteuerung verbunden. Zur sicheren Abschaltung von gefahrbringenden Bewegungen sind nach Vorschriften zum Arbeitsschutz zwei Schaltsignale vorzusehen. Mindestens eines der Schaltsignale führt zu einem sicheren Abschalten eines betreffenden Aktors. Ist beispielsweise eines der Schaltsignale durch einen Kurzschluss nicht mehr änderbar, kann über das zweite Schaltsignal die gefahrbringende Bewegung abgeschaltet werden. Bei dem erfindungsgemäßen Sicherheitslichtgitter wird beispielsweise jeweils einer der zwei sicherheitsgerichteten Ausgänge 32 und 32' durch eine der Sende-/Empfangsleisten 2 und 2' zur Verfügung gestellt.

Eine Auflösung des Schutzfeldes 1 wird dabei so gewählt, dass durch ein kleinstes unzulässiges Objekt mindestens zwei Lichtstrahlen 20 abgedeckt werden. Durch ein Objekt wird somit mindestens der Empfang von Licht in mindestens einem Lichtempfänger E1.1 bis E2.3 je Sende-/Empfangsleiste 2 und 2' unterbrochen. Damit stellen beide Sende-/Empfangsleisten 2 und 2' jeweils ein sicheres Schaltsignal am sicherheitsgerichteten Ausgang 32 und 32' zur Verfügung.

Die Lichtsender S1.1 bis S2.3 und Lichtempfänger E1.1 bis E2.3 können auch gruppenweise abwechselnd angeordnet sein. Beispielsweise können nacheinander zwei Lichtsender S1.1 und S1.2 und danach zwei Lichtempfänger E1.1 und E1.2 nacheinander angeordnet werden.

Erfindungsgemäß bilden die Lichtempfänger E1.1 bis E1.3 mit den Lichtsendern S1.1 bis S1.3 einer Sende-/Empfangsleiste 2 bzw. 2' einen Lichttaster. Bevorzugt bilden dabei benachbarte Lichtempfänger E1.1 und Lichtsender S1.1 jeweils einen Lichttaster. So ist es es gemäß Figur 1 vorgesehen, dass der Lichtsender S1.1 und der Lichtempfänger E1.1 einen Lichttaster bilden, sowie Lichtsender S1.2 und Lichtempfänger E1.2 usw. Dies führt zu einer optimalen Auflösung des Lichttasters in einem Nahbereich und führt zu einem einfachen Aufbau und einer einfachen Auswertung der Lichttaster. Benachbarte Lichtsender S1.1 bis S1.3 und Lichtempfänger E1.1 bis E1.3 führen zu einem kleinen Basisabstand, wodurch der Lichtempfänger jedoch auch vorteilhaft kompakt ausgeführt werden kann, da der Sichtbereich des Empfängers E1.1 bis E1.3 kleiner gestaltet werden kann.

Jedoch könnte es alternativ auch vorgesehen sein, dass der Lichtsender 1.1 mit dem Lichtempfänger E1.3 einen Lichttaster bildet. Beliebige Kombinationen sind im Rahmen der Erfindung möglich. Wichtig hierbei ist, dass durch den Abstand der Lichtsender S1.1 bis S1.3 bzw. S2.1 bis S2.3 und Lichtempfänger E1.1 bis E1.3 bzw. E2.1 bis E2.3 in einer Sende-/Empfangsleiste 2 bzw. 2' für einen Lichttaster der Basisabstand des Lichttasters definiert wird, wenn das Prinzip der Triangulation angewendet wird. Je größer ein solcher Basisabstand ist, desto größer ist eine Entfernungsauflösung in einem Fernbereich.

Der Lichtaster kann dabei neben dem Prinzip der Triangulation auch nach dem Prinzip der Lichtlaufzeitmessung oder anderer Prinzipien wie Phasenlagenmessung ausgebildet sein.

Ist der Lichttaster nach dem Prinzip der Triangulation ausgebildet, so weist der Lichtempfänger E1.1 bis E1.3 bzw. E2.1 bis E2.3 einen ortsauflösenden Empfänger auf, beispielsweise ein Zeilenelement oder ein Matrixelement mit vorgeordneter Abbildungsoptik. Der vom zugehörigen Lichtsender S1.1 bis S1.3 bzw. S2.1 bis S2.3 ausgestrahlte Lichtspot wird dabei von einem in das Schutzfeld eintretenden Objekt remittiert und auf dem ortsauflösenden Empfänger abgebildet. Der Auftrittpunkt der Abbildung ist dabei abhängig von dem Abstand des Objektes zu dem Lichtempfänger E1.1 bis E1.3 bzw. E2.1 bis E2.3. Die Steuer und Auswerteeinheit 6 bzw. 6' ist dazu ausgebildet, den ortsauflösenden Lichtempfänger E1.1 bis E1.3 bzw. E2.1 bis E2.3 auszuwerten und somit den Abstand des Objektes zu bestimmen.

Ist der Lichttaster nach dem Prinzip der Lichtlaufzeitmessung ausgebildet, so wird durch den Lichtsender S1.1 bis S1.3 bzw. S2.1 bis S2.3 ein Lichtimpuls ausgesendet, der nach Reflexion an dem in den Schutzbereich eintretenden Objekt von dem Lichtempfänger E2.1 bis E2.3 bzw. E1.1 bis E1.3 empfangen wird. Der Lichtimpuls hat eine Länge von wenigen Pikosekunden. Der Lichtempfänger E1.1 bis E2.3 ist dabei in der Lage, den empfangenen Lichtimpuls zeitlich hinreichend genau zu empfangen, um ausgehend von der Lichtlaufzeit eine genaue Entfernung des Objektes bestimmen zu können. Die Steuer und Auswerteeinheit 6 bzw. 6' wertet dabei die Signallaufzeit zwischen Aussenden und Empfangen des Lichtimpulses aus und bestimmt daraufhin die Entfernung zu dem Objekt.

In einem nicht dargestellten weiteren Ausführungsbeispiel weist das Sicherheitslichtgitter lediglich zwei oder drei Sende-/Empfangspaare auf und die Überwachung auf Unterbrechung der Lichtstrahlen sowie die Abstandsmessung der erfindungsgemäß vorgesehenen Lichttaster wird gleichzeitig durchgeführt. Für die Abstandsmessung wird nun ein Schaltpunkt je Lichttaster definiert. Damit kann sichergestellt werden, dass zwischen der Sende-/Empfangsleiste und dem Objekt sich kein unzulässiges Objekt, beispielsweise eine Person, befindet, was im Prinzip möglich wäre, wenn das Lichtgitter zum Durchlassen des zulässigen Objektes deaktiviert (im Muting-Modus) ist. Dazu muss gewährleistet sein, dass das zulässige Objekt immer an der gleichen Position durch das Schutzfeld gefördert wird und der Lichttaster immer dann ein Sicherheitsschaltsignal auslöst, wenn eine Entfernung kleiner als der Schaltpunkt gemessen wird. Dadurch können die bisher für diese Absicherung vorgesehenen mechanischen Pendelklappen ersetzt werden.

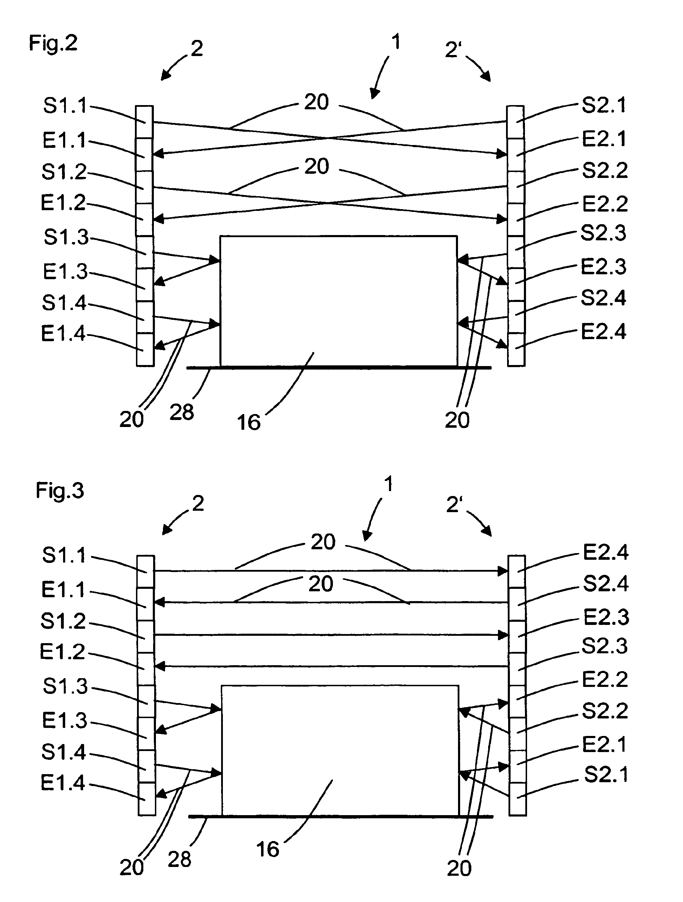

Anhand der Figur 2 wird im Folgenden beispielhaft eine Auswertung der optischen Lichtwege zwischen den Lichtsendern S1.1 bis S2.4 und Lichtempfängern E1.1 bis E2.4 der Sende-/Empfangsleisten 2 und 2' erläutert. Der Einfachheit halber sind nur die Lichtsender S1.1 bis S2.4 und Lichtempfänger E1.1 bis E2.4 der Sende-/Empfangsleisten dargestellt. Gleiche Teile sind hierbei mit gleichen Bezugszeichen innerhalb der Figuren 1 bis 6 dargestellt. In diesem Ausführungsbeispiel werden die baugleichen Sende-/Empfangsleisten 2 und 2' durch die jeweilige Steuer- und Auswerteeinheiten angesteuert. Vor Inbetriebnahme des Sicherheitslichtgitters kann eine Konfiguration eingegeben oder eingelernt werden und in einem Speicher in den jeweiligen Sende-/Empfangsleisten 2 bzw. 2' gespeichert werden. Um nur eine Sende-/Empfangsleiste 2 oder 2' konfigurieren zu müssen, sind Mittel zur optischen Datenübertragung vorgesehen. Beispielsweise kann über eine voreingestellte optische Übertragungsstrecke gebildet aus dem Lichtsender S1.1 und dem Lichtempfänger E2.1 und/oder dem Lichtsender S2.1 und dem Lichtempfänger E1.1 eine Konfiguration zwischen den beiden Sende-/Empfangsleisten 2 und 2' übertragen werden. Nach dem Einschalten beginnt zunächst der Lichtsender S1.1 Lichtpulse auszusenden. Nach dem Empfang von den ausgesendeten Lichtpulsen durch Lichtempfänger E2.1 werden Lichtpulse über den Lichtsender S1.2 ausgesendet, welche über den Lichtempfänger E2.2 empfangen werden. Nach einem Empfangen von Sendepulsen über den Lichtempfänger E2.2 sendet erneut der Lichtsender S1.1, angesteuert von der Steuer- und Auswerteeinheit. Ein erneuter Zyklus wird gestartet. Auch andere Konfigurationen, wie eine Ausblendung von Objekten im Sicherheitslichtgitter, Stummschalten des Sicherheitslichtgitters für eine bestimmte Zeitdauer, eine Wiederanlaufsperre oder eine Schützkontrolle kann als Konfiguration zwischen den Sende-/Empfangsleisten übertragen werden. Eine solche Datenübertragung kann auch zur Synchronisation benutzt werden.

Im unteren Bereich des Schutzfeldes 1 befindet sich ein in das Schutzfeld eintretendes Objekt 16. Das Objekt 16 wird dabei in einer Transportrichtung quer zu den Sende-/Empfangsleisten 2 und 2' zwischen diesen hindurch transportiert. Die Lichtstrahlen 20 der Lichtsender S1.1, S1.2, S2.1 und S2.2 sind dabei nicht unterbrochen und gelangen auf den jeweiligen gegenüberliegenden Lichtempfänger E2.1, E2.2, E1.1 und E1.2 . Die Lichtstrahlen 20 der Lichtsender S1.3, S1.4, S2.3 und S2.4 werden jedoch unterbrochen, und deren Lichtstrahlen können nicht auf die gegenüberliegenden Lichtempfänger E2.3, E2.4, E1.3 und E1.4 gelangen. Dadurch kann zunächst die genaue Höhe des Objektes 16 festgestellt werden.

Da im unteren Bereich eine Lichtstrahlunterbrechung stattfand, werden die Lichtsender S1.3, S1.4, S2.3 und S2.4 und die Lichtempfänger E2.3, E2.4, E1.3 und E1.4 im unteren Bereich nun erfindungsgemäß nach dem Prinzip eines Lichttasters ausgewertet. Ein am Objekt reflektierter oder remittierter Lichtstrahl des Lichtsenders S1.3 wird dabei von dem Lichtempfänger E1.3 empfangen und von der Steuer- und Auswerteeinheit ausgewertet. Analog dazu werden die Lichtempfänger E1.4, E2.3 und E2.4 ausgewertet, die jeweils das remittierte Signal der Lichtsender S1.4, S2.3 und S2.4 aufnehmen. Ausgehend von den empfangenen Signalen werden die jeweiligen Objektabstände des Objektes 16 zu beiden Seiten bestimmt. Die Auswertung erfolgt dabei zyklisch wiederholend für jeden Lichttaster, während das Objekt 16 das Schutzfeld 1 durchläuft. Dadurch werden fortlaufend Abstände des Objektes zur jeweiligen Sende-/Empfangsleiste bestimmt und die Kontur des Objekts 16 über die gesamte Länge vermessen.

Nachdem das Objekt 16 das Schutzfeld 1 durchlaufen hat, liegen in der Steuer- und Auswerteeinheit ein Höhenprofil des Objektes 16 und die seitlichen Konturen des Objektes 16 vor. Um das Objekt 16 zu klassifizieren, wird das Höhenprofil und die seitlichen Konturen mit in einem Speicher abgelegten Referenzkonturen verglichen. Entspricht die erfasste Objektkontur einer abgespeicherten Referenzkontur, so wird das Objekt 16 als zulässig eingestuft und kann weiter transportiert werden. Entspricht die erfasste Objektkontur aber nicht der Referenzkontur, so wird entweder ein Sicherheitsschaltsignal ausgelöst und eine gefahrbringende Bewegung einer Bearbeitungsmaschine gestoppt, da es sich bei dem eintretenden Objekt 16 um eine Person handeln könnte, oder je nach Klassifizierung des Objektes 16 kann auch eine Sortiereinrichtung angesteuert werden, um das Objekt 16 einer anderen Bearbeitungsstation zuzuführen.

Nachdem das Objekt 16 das Schutzfeld 1 verlassen hat, werden wieder Sende-/Empfangspaare ausgewertet, um eine Lichtstrahlunterbrechung festzustellen. Dies hat den Vorteil, dass lediglich eine sehr schnelle und einfache Auswertung unterbrochener Lichtstrahlen 20 notwendig ist. Erst im Falle einer Unterbrechung wird eine aufwendigere Auswertung der erfindungsgemäßen Lichttaster durchgeführt.

Figur 3 zeigt eine Anordnung gemäß Figur 2, jedoch ist die zweite Sende-/Empfangsleiste 2' gegenüber der ersten Sende-/Empfangsleiste 2 längsseits um 180° gedreht. Gleiche Bezugszeichen bezeichnen dabei gleiche Teile wie in Figur 2. Gegenüber dem Ausführungsbeispiel aus Figur 2 verlaufen hier die Lichtstrahlen 20 zunächst parallel zwischen den Lichtsendern S1.1 bis S2.4 und den Lichtempfängern E1.1 bis E2.4 verschiedener Empfangspaare. Dadurch ist die Auflösung des Schutzfeldes gleichmäßiger- und homogener als in dem Beispiel gemäß Figur 2. Der Lichtsender S1.1 ist dabei dem Lichtempfänger E2.4 zugeordnet, der Lichtsender S2.4 dem Lichtempfänger E1.1 usw. Ein in das Schutzfeld 1 eindringendes Objekt 16 unterbricht dabei den unteren Teil des Schutzfeldes. Ausgehend von der Unterbrechung werden wiederum Lichtsender S1.3, S1.4, S2.2 und S2.1 und Lichtempfänger E1.3, E1.4, E2.2 und E2.1 nach dem Prinzip eines Lichttasters ausgewertet. Hierbei ist der Lichtsender S1.3 dem Lichtempfänger E1.3 zugeordnet, der Lichtsender S2.2 dem Lichtempfänger E2.2 usw. Eine Auswertung findet nach dem gleichen Prinzip statt wie zu Figur 2 ausgeführt wurde. Erfindungsgemäß kann es auch vorgesehen sein, dass die Steuer- und Auswerteeinheit die Lichtempfänger E1.1 bis E2.4 sowohl nach dem Lichtschrankenprinzip, also einer Strahlunterbrechung ausgewertet und gleichzeitig eine Auswertung nach dem Lichttasterprinzip, also einer Abstandsmessung durchführt. Dadurch wird ein Umschalten zwischen den Auswertungen vermieden und es liegen ständig beide Informationen vor, Objektabstände und Objekthöhen des Objektes 16.

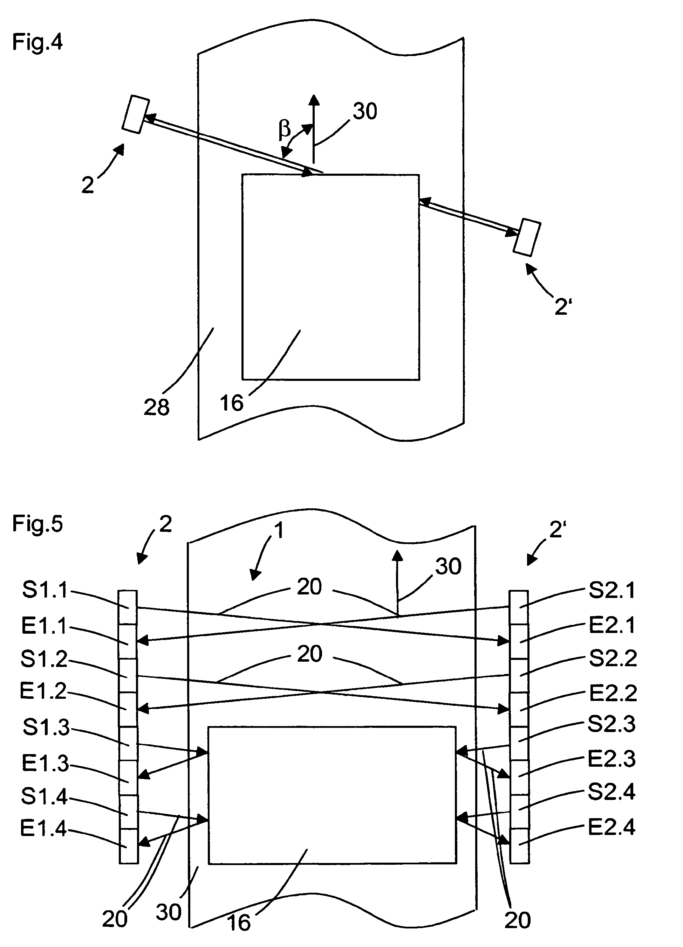

Figur 4 zeigt eine weitere Ausführungsform der Erfindung. Gemäß Figur 4 ist eine Ansicht von oben auf das erfindungsgemäße Sicherheitslichtgitter mit den Sende-/Empfangsleisten 2 und 2' und einer Transporteinrichtung 28 gezeigt. Das Sicherheitslichtgitter ist identisch zu den Ausführungsbeispielen nach Figur 2 und 3, jedoch wurde das Sicherheitslichtgitter in einem Winkel β zu der Transportrichtung 30 angeordnet. Dieser Winkel β liegt in einem Bereich von etwa 20° bis 70°, vorzugsweise 30° bis 60° und ganz bevorzugt 45° zur Transportrichtung 30. Dadurch ist es vorteilhaft möglich, zusätzlich zu dem Höhenprofil alle vier Seiten des Objektes 16 abzutasten. Dadurch kann eine komplette Objektkontur erfasst und klassifiziert werden. Weiter ist es auch vorgesehen, mehrere Sicherheitslichtgitter anzuordnen um komplexere Objekte zu überwachen und/oder zu vermessen.

Figur 5 zeigt ein weitere Ausführungsbeispiel, wobei die Figur 5 auch ein Blick von oben auf eine Transporteinrichtung 28 zeigt. Die Sende-/Empfangsleisten 2 und 2' des Sicherheitslichtgitters sind dabei horizontal in Transportrichtung 30 angeordnet. Die Funktionsweise des Sicherheitslichtgitters ist dabei analog wie in den Figuren 2 und 3 erläutert, mit dem Unterschied, dass das Schutzfeld 1 flächig in Transportrichtung 30 angeordnet ist. Dadurch kann durch die nacheinander erfolgende Unterbrechung der Lichtstrahlen 20 eine Fördergeschwindigkeit ermittelt werden.

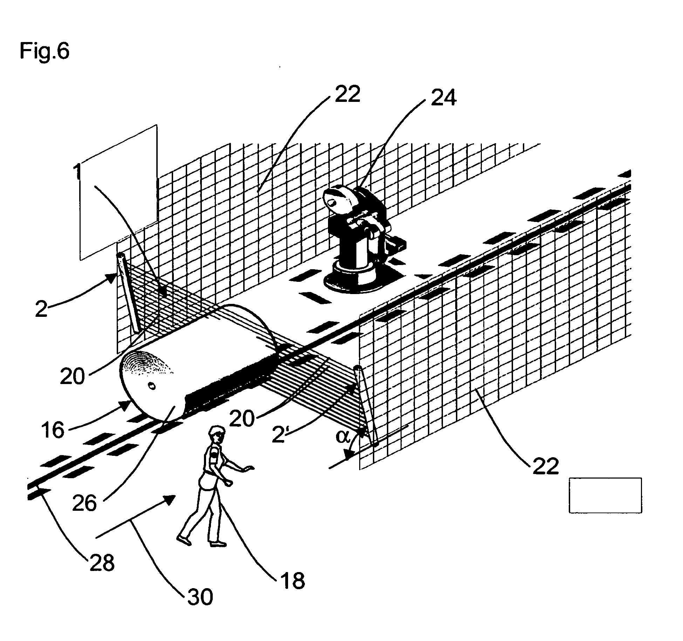

Figur 6 zeigt eine Absicherung eines Gefahrenbereichs mit einem erfindungsgemäßen Sicherheitslichtgitter zur Durchführung des erfindungsgemäßen Verfahrens in einem weiteren Beispiel. Ein Objekt 16, z. B. eine Papierrolle 26, wird auf einer Transportvorrichtung 28 in Richtung einer Maschine 24 bewegt, zur weiteren Bearbeitung der Papierrolle 26. Die Maschine 24 führt dabei in dem Gefahrenbereich eine gefahrbringende Bewegung aus, die für eine Person 18 im Bereich der Maschine 24 eine Verletzungsgefahr darstellt.

Der Transport des Objektes 16 erfolgt ohne Überwindung von mechanischen Barrieren zu der Maschine 24. Zur Zutrittsabsicherung sind an zwei Seiten der Maschine 24 Sperrgitter 22 angebracht, um den unzulässigen Zugang zu dem Gefahrenbereich an die Maschine 24 abzusperren. Um den Zugang zu dem Gefahrenbereich zum Schutz der Person 18 zu überwachen und gleichzeitig den Transport der Papierrolle 26 zu ermöglichen, ist das erfindungsgemäße Sicherheitslichtgitter zu beiden Seiten des Transportweges angebracht. Die Papierrolle 26 wird mit einer Transportvorrichtung 28 in Transportrichtung 30 bewegt.

Das Sicherheitslichtgitter besteht dabei aus den beiden Sende-/Empfangsleisten 2 und 2' und diese werden, wie in den Figuren 2 und 3 ausgeführt, ausgewertet. Die Sende-/Empfangsleisten 2 und 2' sind dabei in einem Winkel α zur Bewegungsrichtung des Objektes 16 geneigt. Der Winkel α kann 0 bis 180° betragen. Es ist somit auch möglich die Sende-/Empfangsleisten 2 und 2' senkrecht anzuordnen. Zusätzlich zu dem Winkel α kann das Sicherheitslichtgitter in einem Winkel β gemäß Figur 4 angeordnet werden. Eine zugehörige Steuer- und Auswerteeinheit ist dabei so programmiert, dass zulässige Objekte 16, die das Lichtgitter 1 passieren dürfen, definiert sind, beispielsweise mittels ihrer Kontur. Ein solches zulässiges Objekt 16 kann beispielsweise ein Objekt 16 mit geschlossener Umfangskontur sein, wie die Papierrolle 26. In der Steuer- und Auswerteeinheit ist dabei eine Referenzkontur in Form eines Kreisbogens für beide Sende-/Empfangsleisten 2 und 2' abgespeichert, die der Form der Papierrolle 26 entsprechen, jedoch nicht zwangsläufig deren Größe. Entspricht die Kontur der Papierrolle 26 der abgespeicherten Referenzkontur so wird die Papierrolle 26 als zulässiges Objekt 16 klassifiziert und kann das Sicherheitslichtgitter passieren, um einer Bearbeitung durch die Maschine 24 zugeführt zu werden. Dabei werden Papierrollen 26 unterschiedlichen Durchmessers und unterschiedlicher Länge als zulässig erachtet, da diese Papierrollen 26 alle einen Kreisbogenform als Abstandkontur aufweisen. Versucht jedoch eine Person 18 durch das Schutzfeld 1 in den Gefahrenbereich zu gelangen, so wird die Person 18 aufgrund einer Abweichung zu der Referenzkontur erkannt und die Maschine gestoppt oder in einen ungefährlichen Betriebszustand überführt.

Die beschriebenen Ausführungsformen sind auch miteinander kombinierbar, so dass die Lichttaster des erfindungsgemäßen Lichtgitters verschiedene Funktionen erfüllen können.

### Bezugszeichen:

- 1: Schutzfeld
- 2, 2': Sende-/Empfangsleisten
- 4: Sende-/Empfangspaar
- 6, 6': Steuer- und Auswerteeinheit
- 8: Mittel zur Synchronisation
- 14: ortsauflösendes Empfangselement
- 16: Objekt
- 18: Person
- 20: Lichtstrahlen
- 22: Sicherungszaun
- 24: Maschine
- 26: Papierrolle
- 28: Transporteinrichtung
- 30: Transportrichtung
- 32, 32': sicherer Ausgang
- a: Winkel

- S1.1, S1.2, S1.3, S1.4: Lichtsender
- S2.1, S2.2, S2.3, S2.4: Lichtsender
- E1.1, E1.2, E1.3, E1.4: Lichtempfänger
- E2.1, E2.2, E2.3, E2.4: Lichtempfänger

## Patentansprüche

1. Sicherheitslichtgitter zur Überwachung eines Schutzbereiches mit wenigstens zwei Sende-/Empfangsleisten (2, 2'),
mit wenigstens einem Lichtsender (S1.1, S1.2, S1.3, S1.4, S2.1, S2.2, S2.3, S2.4) und
mit wenigstens einem Lichtempfänger (E1.1, E1.2, E1.3, E1.4, E2.1, E2.2, E2.3, E2.4),
wobei die Sende-/Empfangsleisten (2, 2') einander gegenüberliegend angeordnet sind, und zwischen diesen durch die Lichtstrahlen der Lichtsender ein Schutzfeld (1) gebildet ist,
wobei jeweils wenigstens ein Lichtsender (S1.1, S1.2, S1.3,S1.4, S2.1, S2.2, S2.3, S2.4) der einen Sende-/Empfangsleiste (2; 2') und wenigstens ein Lichtempfänger (E2.1, E2.2, E2.3, E2.4, E1.1, E1.2, E1.3, E1.4) der anderen Sende-/Empfangsleiste (2, 2') ein Sende-/Empfangspaar bilden,
mit Mitteln zur Synchronisation der Sende-/Empfangsleisten (2, 2') und
mit einer Steuer- und Auswerteeinheit (6, 6'),
**dadurch gekennzeichnet,**
**dass** wenigstens einer der Lichtsender (S1.1, S1.2, S1.3, S1.4, S2.1, S2.2, S2.3, S2.4) einer der Sende-/Empfangsleiste (2; 2') mit wenigstens einem der Lichtempfänger (E1.1, E1.2, E1.3, E1.4, E2.1, E2.2, E2.3, E2.4) derselben Sende-/Empfangsleiste (2; 2') einen Lichttaster zur Bestimmung einer Entfernung zwischen dem die Lichtstrahlunterbrechung verursachenden Objekt und der Sende-/Empfangsleiste (2, 2') bildet, wobei der Lichtsender (S1.1, S1.2, S1.3, S1.4, S2.1, S2.2, S2.3, S2.4) und der Lichtempfänger (E1.1. E1.2. E1.3. E1.4, E2.1, E2.2, E2.3, E2.4) sowohl Teil des Sende-/Empfangspaares als auch Teil des Lichttasters ist.

2. Sicherheitslichtgitter nach Anspruch 1, **dadurch gekennzeichnet, dass** der Lichttaster als Triangulationslichttaster ausgebildet ist und der Lichtempfänger (E1.1, E1.2, E1.3, E1.4, E2.1, E2.2, E2.3, E2.4) ein ortsauflösendes Empfangselement aufweist.

3. Sicherheitslichtgitter nach Anspruch 1, **dadurch gekennzeichnet, dass** der Lichttaster als Lichtlaufzeittaster ausgebildet ist, wobei die Steuer- und Auswerteeinheit (6, 6') ausgebildet ist, die Lichtlaufzeit empfangener Lichtsignale oder Lichtimpulse des Lichtempfängers (E1.1, E1.2, E1.3, E1.4, E2.1, E2.2, E2.3, E2.4) auszuwerten.

4. Sicherheitslichtgitter nach einem der vorhergehenden Ansprüche, **dadurch gekennzeichnet, dass** die Lichtsender (S1.1, S1.2, S1.3, S1.4, S2.1, S2.2, S2.3, S2.4) und die Lichtempfänger (E1.1, E1.2, E1.3, E1.4, E2.1, E2.2, E2.3, E2.4) einzeln abwechselnd nacheinander in den Sende-/Empfangsleisten (2, 2') angeordnet sind.

5. Sicherheitslichtgitter nach Anspruch 5, **dadurch gekennzeichnet, dass** jeweils benachbarte Lichtsender (S1.1, S1.2, S1.3, S1.4, S2.1, S2.2, S2.3, S2.4) und Lichtempfänger (E1.1, E1.2, E1.3, E1.4, E2.1, E2.2, E2.3, E2.4) einen Lichttaster bilden.

6. Sicherheitslichtgitter nach einem der vorhergehenden Ansprüche, **dadurch gekennzeichnet, dass** allen Lichtsendem(S1.1, S1.2, S1.3, S1.4; S2.1, S2.2, S2.3, S2.4) einer der Sende-/Empfangsleiste (2; 2') die Lichtempfänger (E1.1, E1.2, E1.3, E1.4, E2.1, E2.2, E2.3, E2.4) derselben Sende-/Empfangsleiste (2; 2') zur Bildung der Lichttaster zugeordnet sind.

7. Sicherheitslichtgitter nach einem der vorhergehenden Ansprüche, **dadurch gekennzeichnet, dass** die Steuer- und Auswerteeinheit (6, 6') derart ausgebildet ist, dass erst nach einer Lichtstrahlunterbrechung eines Sende-/Empfangspaars der Lichttaster aktiviert wird.

8. Sicherheitslichtgitter nach einem der vorhergehenden Ansprüche, **dadurch gekennzeichnet, dass** die Lichtsender (S1.1, S1.2, S1.3, S1.4, S2.1, S2.2, S2.3, S2.4) und die Lichtempfänger (E1.1, E1.2, E1.3, E1.4, E2.1, E2.2, E2.3, E2.4) in einer festen Reihenfolge nacheinander angesteuert und ausgewertet werden.

9. Sicherheitslichtgitter nach einem der vorhergehenden Absprüche, **dadurch gekennzeichnet, dass** die Sende-/Empfangsleisten (2, 2') identisch aufgebaut sind.

10. Verfahren zur Überwachung eines Schutzbereiches mit
wenigstens zwei, einander gegenüberliegend angeordneten Sende-/Empfangsleisten (2, 2') mit Lichtsendern (S1.1, S1.2, S1.3, S1.4, S2.1, S2.2, S2.3. S2.4) und Lichtempfängern (E1.1, E1.2, E1.3, E1.4, E2.1. E2.2, E2.3, E2.4) zur Bildung eines durch die Lichtstrahlen der Lichtsender (S1.1, S1.2, S1.3, S1.4, S2.1, S2.2, S2.3, S2.4) erzeugten Schutzfeldes (1) zwischen den Sende-/Empfangsteisten (2, 2'), wobei jeweils wenigstens ein Lichtsender (S1.1, S1.2, S1.3, S1.4, S2.1, S2.2, S2.3, S2.4) und wenigstens ein Lichtempfänger (E2.1, E2.2, E2.3, E2.4, E1.1. E1.2, E1.3, E1.4) als Sende-/Empfangspaar zusammenwirken, und bei Unterbrechung wenigstens einer der Lichtstrahlen ein Sicherheitsschaltsignal ausgegeben werden kann,
**dadurch gekennzeichnet,**
**dass** mit einem Lichttaster, gebildet aus wenigstens einem der Lichtsender (S1.1. S1.2, S1.3, S1.4, S2.1, S2.2, S2.3, S2.4) einer der Sende-/Empfangsleiste (2; 2') und wenigstens einem der Lichtempfänger (E1.1, E1.2, E1.3, E1.4, E2.1, E2.2, E2.3, E2.4) derselben Sende-/Empfangsleiste (2; 2') zusätzlich zur Lichtstrahlunterbrechung eine Entfernung zwischen dem die Lichtstrahlunterbrechung verursachenden Objekt (16) und wenigstens einer der Sende-/Empfangsteisten (2; 2') bestimmt wird, wobei der Lichtsender (S1.1, S1.2, S1.3, S1.4, S2.1, S2.2, S2.3, S2.4) und der Lichtempfänger (E1.1, E1.2, E1.3, E1.4, E2.1, E2.2, E2.3, E2.4) sowohl Teil des Sende-/Empfangspaares als auch Teil des Lichttasters ist.

11. Verfahren nach Anspruch 10, **dadurch gekennzeichnet, dass** die Entfernung entweder mittels Triangulation bestimmt wird, wobei der Lichtempfänger (E1.1, E1.2, E1.3, E1.4, E2.1, E2.2, E2.3, E2.4) als ortsauflösender Lichtempfänger ausgebildet ist oder die Entfernung mittels Lichtlaufzeit bestimmt wird.

12. Verfahren nach Anspruch 10 oder 11 **dadurch gekennzeichnet, dass** nach einer Lichtstrahlunterbrechung durch ein Objekt (16) im Schutzfeld (1) die Entfernung bestimmt wird.

13. Verfahren nach Anspruch 10 oder 12 **dadurch gekennzeichnet, dass** nach Bestimmen der Entfernung gemessene Abstände mit wenigstens einem Referenzabstand verglichen werden und abhängig davon das Objekt (16) als zulässig oder unzulässig klassifiziert wird.

14. Verfahren nach Anspruch 10 bis 13, **dadurch gekennzeichnet, dass** mehrere Referenzabstände zusammen eine geometrische Funktion definieren und damit eine Kontur eines Objektes bestimmt werden kann.

## Claims

1. A safety light grid for monitoring a protected zone having at least two transmission/reception strips (2, 2'),
having at least one light transmitter (S1.1, S1.2, S1.3, S1.4, S2.1, S2.2, S2.3, S2.4) and
having at least one light receiver (E1.1, E1.2, E1.3, E1.4, E2.1, E2.2, E2.3, E2.4),
wherein the transmission/reception strips (2, 2') are arranged opposite one another and a protected field (1) is formed between them by the light rays of the light transmitters,
wherein in each case at least one light transmitter (S1.1, S1.2, S1.3, S1.4, S2.1, S2.2, S2.3, S2.4) of the one transmission/reception strip (2; 2') and at least one light receiver (E2.1, E2.2, E2.3, E2.4, E1.1, E1.2, E1.3, E1.4) of the other transmission/reception strip (2, 2') form a transmission/reception pair,
having means for the synchronisation of the transmission/reception strips (2, 2'), and
having a control and evaluation unit (6, 6'),
**characterised in that**
at least one of the light transmitters (S1.1, S1.2, S1.3, S1.4, S2.1, S2.2, S2.3, S2.4) of one of the transmission/reception strips (2; 2') forms, with at least one of the light receivers (E1.1, E1.2, E1.3, E1.4, E2.1, E2.2, E2.3, E2.4) of the same transmission/reception strip (2; 2), a light sensor for determining a distance between the object causing the interruption of the light ray and the transmission/reception strip (2, 2'), with the light transmitter (S1.1, S1.2, S1.3, S1.4, S2.1, S2.2, S2.3, S2.4) and the light receiver (E1.1, E1.2, E1.3, E1.4, E2.1, E2.2, E2.3, E2.4) being both part of the transmission/reception pair and part of the light sensor.

2. A light safety grid in accordance with claim 1, **characterised in that** the light sensor is configured as a triangulation light sensor and the light receiver (E1.1, E1.2, E1.3, E1.4, E2.1, E2.2, E2.3, E2.4) has a spatially resolving reception element.

3. A safety light grid in accordance with claim 1, **characterised in that** the light sensor is configured as a sensor for the time of flight of light, with the control and evaluation unit (6, 6') being configured to evaluate the time of flight of light of received light signals or light pulses of the light receiver (E1.1, E1.2, E1.3, E1.4, E2.1, E2.2, E2.3, E2.4).

4. A safety light grid in accordance with any one of the preceding claims, **characterised in that** the light transmitters (S1.1, S1.2, S1.3, S1.4, S2.1, S2.2, S2.3, S2.4) and the light receivers (E1.1, E1.2, E1.3, E1.4, E2.1, E2.2, E2.3, E2.4) are arranged individually alternately after one another in the transmission/reception strips (2, 2').

5. A safety light grid in accordance with claim 5, **characterised in that** respective adjacent light transmitters (S1.1, S1.2, S1.3, S1.4, S2.1, S2.2, S2.3, S2.4) and light receivers (E1.1, E1.2, E1.3, E1.4, E2.1, E2.2, E2.3, E2.4) form a light sensor.

6. A safety light grid in accordance with any one of the preceding claims, **characterised in that** all the light transmitters (S1.1, S1.2, S1.3, S1.4; S2.1, S2.2, S2.3, S2.4) of one of the transmission/reception strip (2; 2') have the light receivers (E1.1, E1.2, E1.3, E1.4, E2.1, E2.2, E2.3, E2.4) of the same transmission/reception strip (2; 2') associated with them.

7. A safety light grid in accordance with any one of the preceding claims, **characterised in that** the control and evaluation unit (6, 6') is configured such the light sensor is only activated after an interruption of a light beam of a transmission/reception pair.

8. A safety light grid in accordance with any one of the preceding claims, **characterised in that** the light transmitters (S1.1, S1.2, S1.3, S1.4, S2.1, S2.2, S2.3, S2.4) and the light receivers (E1.1, E1.2, E1.3, E1.4, E2.1, E2.2, E2.3, E2.4) are controlled and evaluated after one another in a fixed order.

9. A safety light grid in accordance with any one of the preceding claims, **characterised in that** the transmission/reception strips (2, 2') are identical in structure.

10. A method for monitoring a protected zone having at least two mutually oppositely arranged transmission/reception strips (2, 2') having light transmitters (S1.1, S1.2, S1.3, S1.4, S2.1, S2.2, S2.3, S2.4) and light receivers (E1.1, E1.2, E1.3, E1.4, E2.1, E2.2, E2.3, E2.4) for forming a protected field (1) generated by the light rays of the light transmitters (S1.1, S1.2, S1.3, S1.4, S2.1, S2.2, S2.3, S2.4) between the transmission/reception strips (2, 2'), wherein in each case at least one light transmitter (S1.1, S1.2, S1.3, S1.4, S2.1, S2.2, S2.3, S2.4) and at least one light receiver (E2.1, E2.2, E2.3, E2.4, E1.1, E1.2, E1.3, E1.4) cooperate as a transmission/reception pair, and a safety deactivation signal can be output on interruption of at least one of the light rays,
**characterised in that**,
with a light sensor, formed from at least one of the light transmitters (S1.1, S1.2, S1.3, S1.4, S2.1, S2.2, S2.3, S2.4) of one of the transmission/reception strips (2; 2') and at least one of the light receivers (E1.1, E1.2, E1.3, E1.4, E2.1, E2.2, E2.3, E2.4) of the same transmission/reception strip (2; 2'), in addition to the interruption of the light ray, a distance is determined between the object (16) causing the interruption of the light ray and at least one of the transmission/reception strips (2; 2'), with the light transmitter (S1.1, S1.2, S1.3, S1.4, S2.1, S2.2, S2.3, S2.4) and / or of the light receiver (E1.1, E1.2, E1.3, E1.4, E2.1, E2.2, E2.3, E2.4) being both part of the transmission/reception pair and part of the light sensor.

11. A method in accordance with claim 10, **characterised in that** the either the distance is determined by means of triangulation, with the light receiver (E1.1, E1.2, E1.3, E1.4, E2.1, E2.2, E2.3, E2.4) being made as a spatially resolving light receiver or the distance is determined by means of the time of flight of light.

12. A method in accordance with claim 10 or claim 11, **characterised in that** the distance is determined after an interruption of a light ray by an object (16) in the protected field (1).

13. A method in accordance with claim 10 or claim 12, **characterised in that** measured distances are compared with at least one reference distance after determining the distance and the object (16) is classified as permitted or non-permitted in dependence thereon.

14. A method in accordance with any one of claims 10 to 13, **characterised in that** a plurality of reference distances together define a geometric function and thus a contour of an object can be determined.

## Revendications

1. Barrière lumineuse de sécurité pour la surveillance d'une zone à protéger, comprenant
au moins deux réglettes émettrices/réceptrices (2, 2'),
avec au moins un émetteur de lumière (S1.1, S1.2, S1.3, S1.4, S2.1, S2.2, S2.3, S2.4), et
avec au moins un récepteur de lumière (E1.1, E1.2, E1.3, E1.4, E2.1, E2.2, E2.3, E2.4),
dans laquelle les réglettes émettrices/réceptrices (2, 2') sont agencées à l'opposé l'une de l'autre et au moyen des rayons lumineux de l'émetteur de lumière il se forme entre ces réglettes un champ de protection (1), dans laquelle au moins un émetteur de lumière respectif (S1.1, S1.2, S1.3, S1.4, S2.1, S2.2, S2.3, S2.4) de l'une des réglettes émettrices/réceptrices (2 ; 2') et au moins un récepteur de lumière (E1.1, E1.2, E1.3, E1.4, E2.1, E2.2, E2.3, E2.4) de l'autre réglette émettrice/réceptrices (2, 2') forment une paire émettrice/réceptrice, avec des moyens pour la synchronisation des réglettes émettrices/réceptrices (2, 2'), et
avec une unité de commande et d'évaluation (6, 6'),
**caractérisée en ce que**
l'un au moins des émetteurs de lumière (S1.1, S1.2, S1.3, S1.4, S2.1, S2.2, S2.3, S2.4) de l'une des réglettes émettrices/réceptrices (2 ; 2') forme avec l'un au moins des récepteurs de lumière (E1.1, E1.2, E1.3, E1.4, E2.1, E2.2, E2.3, E2.4) de la même réglette émettrice/réceptrice (2 ; 2') un palpeur lumineux pour déterminer un éloignement entre l'objet qui provoque l'interruption des rayons lumineux et la réglette émettrice/réceptrice (2, 2'), et l'émetteur de lumière (S1.1, S1.2, S1.3, S1.4, S2.1, S2.2, S2.3, S2.4) et le récepteur de lumière (E1.1, E1.2, E1.3, E1.4, E2.1, E2.2, E2.3, E2.4) font à la fois partie de la paire émettrice/réceptrice et du palpeur lumineux.

2. Barrière lumineuse de sécurité selon la revendication 1, **caractérisée en ce que** le palpeur lumineux est réalisé sous forme de palpeur lumineux à triangulation, et le récepteur de lumière (E1.1, E1.2, E1.3, E1.4, E2.1, E2.2, E2.3, E2.4) comprend un élément récepteur à résolution locale.

3. Barrière lumineuse de sécurité selon la revendication 1, **caractérisée en ce que** le palpeur lumineux est réalisé sous forme de palpeur à temps de parcours de la lumière, et l'unité de commande et d'évaluation (6, 6') est réalisée pour évaluer le temps de parcours de la lumière des signaux lumineux reçus ou des impulsions lumineuses reçues par le récepteur de lumière (E1.1, E1.2, E1.3, E1.4, E2.1, E2.2, E2.3, E2.4).

4. Barrière lumineuse de sécurité selon l'une des revendications précédentes, **caractérisée en ce que** les émetteurs de lumière (S1.1, S1.2, S1.3, S1.4, S2.1, S2.2, S2.3, S2.4) et les récepteurs de lumière (E1.1, E1.2, E1.3, E1.4, E2.1, E2.2, E2.3, E2.4) sont agencés individuellement en alternance les uns après les autres dans les réglettes émettrices/réceptrices (2, 2').

5. Barrière lumineuse de sécurité selon la revendication 4, **caractérisée en ce que** des émetteurs de lumière (S 1.1, S 1.2, S 1.3, S 1.4, S2.1, S2.2, S2.3, S2.4) et des récepteurs de lumière (E1.1, E1.2, E 1.3, E 1.4, E2.1, E2.2, E2.3, E2.4) voisins respectifs forment un palpeur lumineux.

6. Barrière lumineuse de sécurité selon l'une des revendications précédentes, **caractérisée en ce que** les récepteurs de lumière (E1.1, E1.2, E1.3, E1.4, E2.1, E2.2, E2.3, E2.4) d'une réglette émettrice/réceptrice (2 ; 2') sont associés à tous les émetteurs de lumière (S1.1, S1.2, S1.3, S1.4, S2.1, S2.2, S2.3, S2.4) de la même réglette émettrice/réceptrice (2 ; 2') pour former le palpeur lumineux.

7. Barrière lumineuse de sécurité selon l'une des revendications précédentes, **caractérisée en ce que** l'unité de commande et d'évaluation (6, 6') est réalisée de telle façon que le palpeur lumineux est activé uniquement après une interruption du rayon lumineux d'une paire émettrice/réceptrice.

8. Barrière lumineuse de sécurité selon l'une des revendications précédentes, **caractérisée en ce que** les émetteurs de lumière (S1.1, S1.2, S1.3, S1.4, S2.1, S2.2, S2.3, S2.4) et les récepteurs de lumière (E1.1, E1.2, E1.3, E1.4, E2.1, E2.2, E2.3, E2.4) sont pilotés et évalués dans une succession fixe les uns après les autres.

9. Barrière lumineuse de sécurité selon l'une des revendications précédentes, **caractérisée en ce que** les réglettes émettrices/réceptrices (2, 2') sont de structure identique.

10. Procédé pour la surveillance d'une zone à protéger au moyen d'au moins deux réglettes émettrices/réceptrices (2, 2') agencées à l'opposé l'une de l'autre, comprenant des émetteurs de lumière (S 1.1, S 1.2, S 1.3, S 1.4, S2.1, S2.2, S2.3, S2.4) et des récepteurs de lumière (E1.1, E1.2, E1.3, E1.4, E2.1, E2.2, E2.3, E2.4) pour former un champ protégé (1) engendré par les rayons lumineux des émetteurs de lumière (S 1.1, S 1.2, S1.3, S1.4, S2.1, S2.2, S2.3, S2.4) entre les réglettes émettrices/réceptrices (2, 2'), de sorte qu'au moins un émetteur de lumière () et au moins un récepteur de lumière () coopèrent respectivement en tant que le père émettrices/réceptrice, et en cas d'interruption de l'un au moins des rayons lumineux un signal de commutation de sécurité peut être délivré,
**caractérisée en ce que**
au moyen d'un palpeur lumineux, formé d'au moins un des émetteurs de lumière (S 1.1, S1.2, S1.3, S1.4, S2.1, S2.2, S2.3, S2.4) de l'une des réglettes émettrices/réceptrices (2, 2') et d'au moins un des récepteurs de lumière (E1.1, E 1.2, E 1.3, E1.4, E2.1, E2.2, E2.3, E2.4) de la même réglette émettrice/réceptrice (2 ; 2'), on détermine, en supplément à l'interruption du rayon lumineux, un éloignement entre l'objet (16) qui provoque l'interruption des rayons lumineux et l'une au moins des réglettes émettrices/réceptrices (2 ; 2'), et l'émetteur de lumière (S1.1, S1.2, S1.3, S1.4, S2.1, S2.2, S2.3, S2.4) et le récepteur de lumière (E1.1, E1.2, E1.3, E1.4, E2.1, E2.2, E2.3, E2.4) font à la fois partie de la paire émettrice/réceptrice et du palpeur lumineux.

11. Procédé selon la revendication 10, **caractérisé en ce que** l'éloignement est déterminé au moyen d'une triangulation, le récepteur de lumière (E1.1, E1.2, E1.3, E1.4, E2.1, E2.2, E2.3, E2.4) étant réalisé sous forme de récepteur de lumière à résolution locale, ou bien **en ce que** l'éloignement est déterminé au moyen du temps de parcours de la lumière.

12. Procédé selon la revendication 10 ou 11, **caractérisé en ce que**, après une interruption des rayons lumineux par un objet (16) dans le champ protégé (1) on détermine l'éloignement.

13. Procédé selon la revendication 10 ou 12, **caractérisé en ce que**, après détermination de l'éloignement, des distances mesurées sont comparées à au moins une distance de référence et, en fonction de cette comparaison, l'objet (16) est classifié comme admissible ou inadmissible.

14. Procédé selon la revendication 10 à 13, **caractérisé en ce que** plusieurs distances de référence définissent conjointement une fonction géométrique, et **en ce que** l'on peut ainsi déterminer un contour d'un objet.
